# EUROPEAN PATENT SPECIFICATION

(11) **EP 1 536 691 B1**
(45) Date of publication and mention of the grant of the patent: **26.05.2010**
(21) Application number: 03795523.4
(22) Date of filing: 10.09.2003
(51) Int. Cl.: A23K 1/175, A23K 1/00, C01B 25/32

(54) **NUTRITIONAL ADDITIVE FOR ANIMALS**
NÄHRSTOFFADDITIV FÜR TIERE
SUPPLEMENT NUTRITIONNEL POUR ANIMAUX

(30) Priority: 11.09.2002 SE 0202686
(43) Date of publication of application: 08.06.2005
(73) Proprietor: Yara Helsingborg AB, 251 09 Helsingborg (SE)
(72) Inventor: PERSSON, Lars, S-256 56 Helsingborg (SE); NILSSON, Bernt, S-252 32 Helsingborg (SE)
(74) Representative: Andersson, Mikael Per Robert
(86) International application number: PCT/SE2003/001401
(87) International publication number: WO 2004/023886

(56) References cited:
- EP-A1- 0 090 995
- EP-A1- 0 175 805
- WO-A1-00/24268
- GB-A- 1 275 280
- GB-A- 1 509 680

## Description

### Field of the Invention

The present invention relates to a nutritional additive or supplement for animals and a method for production thereof. More specifically, the present invention concerns a calcium phosphate with a high Ca/P ratio, a high solubility of phosphorus and a low buffer capacity.

### Background Art

With a view to meeting the phosphorus requirements of domestic animals, inorganic feedstuff phosphates, usually calcium phosphates, are added to most fodder mixtures. The digestibility of phosphorus (P) varies in the different calcium phosphates. As an example, the Dutch feedstuff tables (the Veevoedertabel 2000, Centraal Veevoederbureau) can be quoted, indicating the following digestibility coefficients for pigs:

**Table 1**

| | Product contents | | Dig. Coeff. for pigs Average | Ca/P ratio | Relative solubility of water-soluble P % |
|---|---|---|---|---|---|
| | % tot. Ca | % tot. P | | | |
| Monocalcium phosphate | 16 | 22.6 | 0.83 | 0.7 | 75-85 |
| Dicalcium phosphate, anhydrate | 25 | 20 | 0.64 | 1.38 | 0-1 |
| Dicalcium phosphate, dihydrate | 24 | 18.2 | 0.70 | 1.38 | 0-1 |

It is time-consuming and expensive work to determine the digestibility of phosphorus by animal experiments. Therefore the solubility of phosphorus is used as an indication of nutritional value. Since phosphorus is absorbed from the animal intestinal tract only in the form of phosphate ions, the phosphate must be dissolved. The better solubility of a calcium phosphate, the better can the phosphorus be employed by the animal. Solubility in water, citric acid and ammonium citrate is used as a quality measure in the phosphate industry.

A calcium phosphate with a Ca/P ratio >1, as in dicalcium phosphate, is in many fodder mixtures preferred to one with a high P content in relation to the Ca content. However, the use of dicalcium phosphate (DCP) is restricted by its low phosphorus digestibility/solubility, see Table 1 above.

Phosphorus is an expensive ingredient in the feedstuff. By improving digestibility, a greater part can be employed and overdosage can be prevented since the indigestible part of phosphorus is excreted with the faeces. By unsatisfactory handling of manure, phosphorus can get into watercourses and there cause environmental problems by overfertilisation. For this reason, great importance is attached to amounts and quality of phosphorus in the keeping of animals.

An object of the invention thus is to provide a granular composition of calcium and phosphorus, which has a high Ca/P ratio and high calcium and phosphorus availability and a method for production thereof.

Another object of the invention is to provide a granular composition of calcium and phosphorus with a low buffer capacity.

Other objects, features and advantages of the present invention will be evident from the description.

### Summary of the Invention

According to the present invention, the above objects are achieved by a composition comprising calcium, phosphorus and sulphur, and a method for producing the same as a granulate.

According to the present invention, there is provided a granular composition, which comprises calcium, phosphorus and sulphur, which has a high Ca/P ratio, a high calcium and phosphorus availability and which has a buffer capacity of less than 700 mekv H⁺/kg.

The composition according to the present invention is produced by granulation of a calcium compound, the granulation being made by means of a granulation liquid comprising sulphuric acid.

When, for instance, DCP is granulated with a granulation liquid comprising sulphuric acid according to the formula below

2 CaHPO₄ + H₂SO₄ → Ca (H₂PO₄)₂ + CaSO₄

the added sulphur from the sulphuric acid binds part of the calcium content as gypsum (CaSO₄), which increases the free phosphate content and thus has a positive effect on the Ca/P ratio. Since gypsum is neural, also a lower buffer capacity of the granulate is obtained. A low buffer capacity is an advantage for animal feedstuffs which should have low pH values. In the reaction, also monocalcium phosphate (MCP) (Ca(H₂PO₄)₂) is formed, which makes the phosphorus transform into a more water-soluble form.

There are thus several advantages of the inventive method: a high Ca/P ratio, a high solubility of calcium and phosphorus, a low buffer capacity and an addition of sulphur to the granulate/feedstuff are obtained.

WO 0024268 discloses granulation of MgO with phosphoric acid and sulphuric acid to increase the solubility of Mg. A high concentration of phosphoric acid minimises the formation of magnesium hydroxide in favour of magnesium phosphate which is considerably more easily soluble. Also the easily soluble magnesium sulphate is formed in the granulation.

### Detailed Description of the Invention

The granular composition according to the invention comprises calcium, phosphorus and sulphur.

The composition is produced by granulation with a granulation liquid comprising sulphuric acid.

In a preferred embodiment of the invention, sulphuric acid is added in such an amount that the final product comprises 1-9% by weight sulphur, preferably 3-9% by weight.

In another preferred embodiment, the granulation liquid comprises 25-95% by weight sulphuric acid, preferably 50-80% by weight.

In one embodiment, the granulation liquid may also comprise phosphoric acid in order to add phosphate ions to the product. High concentrations of phosphoric acid, however, have a negative effect on the Ca/P ratio.

A preferred calcium compound in the production of a composition according to the present invention is calcium phosphate, most preferably dicalcium phosphate (CaHPO₄).

When the calcium source is limestone, the sulphur content of the final product is preferably in the range of 3-8% by weight. The granulation liquid preferably comprises 50-65% by weight phosphoric acid and 10-30% by weight sulphuric acid, phosphoric acid and sulphuric acid together preferably constituting 70-90% by weight of the granulation liquid.

In an embodiment of the invention, sulphuric acid is added to the granulation liquid in such an amount that the final product has a buffer capacity of less than 700 mekv H⁺/kg.

In granulation, the granulation liquid can be added in different ways.

An alternative is that the granulation liquid is first mixed with the current components. The current components comprise sulphuric acid and optionally water and/or optionally phosphoric acid, after which the mixed granulation liquid is added to the calcium compound in a granulating device.

Another alternative is that the various components of the granulation liquid, i.e. sulphuric acid and optionally water and/or optionally sulphuric acid, are added each separately, simultaneously or successively, to the calcium compound in a granulating device.

Preferred embodiments will now be described by means of some examples and series of experiments. These should not be considered limiting to the scope of the present invention.

### Examples

In the Examples below, the measurements of phosphorus solubility and calcium solubility have been made as follows:
At room temperature, 3 g sample and 300 ml distilled water have been agitated for 30 min. Subsequently the solution has been diluted to 500 ml and stirred. Then the solution has been filtered to remove the remaining solids. The Ca²⁺ content of the solution was determined flame photometrically by means of ICP, and the amount of dissolved phosphorus was determined by the Quimociac method. These two methods are well known in the technical field.

The used sulphuric acid had a concentration of 96%, and the used phosphoric acid had a concentration of 56%, calculated as P₂O₅.

To determine the buffer capacity, 10 g ground sample was mixed with 490 ml water and titrated with 1-N HCl and 1-N NaOH, respectively, to pH 3.0. The value should be constant for at least 2 min. The consumed amount (ml) of HCl and the amount (ml) of NaOH multiplied by
100=mekv H⁺/kg sample.

### Example 1

Powdered dicalcium phosphate (DCP) was granulated with various combinations of sulphuric acid (SA)/water/phosphoric acid (PA). After granulation, the final product was dried at 90°C. Samples according to Table 2 were prepared.

**Table 2 - DCP+SVS/Water/POS**

| **Sample** | **DC** **(g)** | **SA** **% by weight** | **Water% by weight** | **PA% by weight** |
|---|---|---|---|---|
| 1 | 235 | 89 | 11 | - |
| 2 | 235 | 79 | 21 | - |
| 3 | 235 | 69 | 31 | - |
| 4 | 235 | 59 | 41 | - |
| 5 | 235 | 53 | 47 | - |
| 6 | 235 | 38 | 62 | - |
| 7 | 235 | 37 | 39 | 24 |
| 8 | 235 | 31 | 46 | 23 |
| 9 | 235 | 21 | 79 | - |
| Comp. sample | 235 | - | 62 | 38 |

After drying, the various products were evaluated with regard to product content of P, Ca and S, water solubility and buffer capacity. See Table 3 below.

**Table 3 - Product Contents, Water Solubility, Ca/P ratio and Buffer Capacity.**

| **Sample** | **Product contents %** | | | **Water solubility** | | **Ca/P ratio** | **Buffer capacity mekv H⁺/kg** |
|---|---|---|---|---|---|---|---|
| | **P tot** | **Ca tot** | **S tot** | **P% rel** | **Ca% rel** | | |
| 1 | 14.1 | 19.8 | 8.7 | 99 | 94 | 1.40 | 130 |
| 2 | 15.0 | 21.0 | 8.1 | 89 | 51 | 1.40 | 240 |
| 3 | 15.7 | 21.7 | 7.4 | 80 | 55 | 1.38 | 335 |
| 4 | 16.0 | 22.3 | 6.7 | 70 | 55 | 1.39 | 355 |
| 5 | 16.4 | 23.0 | 6.0 | 59 | 40 | 1.40 | 350 |
| 6 | 17.6 | 24.5 | 4.1 | 34 | 35 | 1.39 | 820 |
| 7 | 18.4 | 22.9 | 4.0 | 53 | 39 | 1.24 | 400 |
| 8 | 18.1 | 21.7 | 4.5 | 70 | 60 | 1.20 | 350 |
| 9 | 18.0 | 24.5 | 2.0 | 14 | 10 | 1.36 | N I |
| Comp. sample | 22.2 | 26.32 | <0.1 | 15 | 9 | 1.19 | 2050 |
| | | | | | | | |
| DCP* | 18 | 24.7 | - | 0-1 | | N I 1.36 | 5920 |
| MCP* | 22.7 | 17.4 | - | 75-85 | N I | 0.77 | 700 |

| | | | | | | | |
|---|---|---|---|---|---|---|---|
| * Frequent values of these compounds (Kemira GrowHow, Sweden). N I no information | | | | | | | |

As is evident from the Table above and compared with the table values of DCP and MCP, good phosphorus solubility and calcium solubility were obtained. Excellent results were obtained when the sulphur content of the final product was kept between 1 and 9% by weight. Particularly high solubilities were obtained when the sulphur content of the final product was 3-9% by weight and the granulation liquid contained more than 25% by weight sulphuric acid. However, the comparative sample, to which only phosphoric acid had been added, exhibited low phosphorus solubility and calcium solubility. When adding phosphoric acid to the sulphuric acid in samples 7 and 8, the Ca/P ratio was reduced. The buffer capacity decreased with an increased addition of sulphuric acid.

### Example 2

Limestone powder (CaCO₃) was granulated with different combinations of phosphoric acid (PA)/sulphuric acid (SA)/water. After granulation, the final product was dried at 90°C. Samples were prepared according to Table 4.

**Table 4 - Limestone/POS/SVS/Water**

| **Sample** | **CaCO₃** **G** | **PA** **% by weight %** | **SA** **by weight** | **Water** **% by weight** |
|---|---|---|---|---|
| A | 146.9 | 65 | 31 | 4 |
| B | 146.9 | 75 | 14 | 11 |
| C | 146.9 | 76 | 7 | 17 |
| D | 146.9 | 82 | 14 | 4 |
| E | 146.9 | 74 | 21 | 4 |
| F | 146.9 | 78 | 18 | 4 |
| G | 146.9 | 83 | 13 | 4 |
| Comp. sample | 146.9 | 81 | 0 | 19 |

After drying, the various products were evaluated with regard to product content of P, Ca and S and water solubility. See Table 5 below.

**Table 5 - Product Contents, Water Solubility and Ca/P ratio**

| **Sample** | **Product contents %** | | | **Water solubility** | | **Ca/P ratio** |
|---|---|---|---|---|---|---|
| | **P tot** | **Ca tot** | **S tot** | **P % by weight rel** | **Ca % by weight rel** | |
| A | 13.6 | 18.4 | 7.9 | 98 | 90 | 1.35 |
| B | 15.6 | 21.2 | 3.5 | 81 | 50 | 1.36 |
| C | 16.9 | 23.2 | 1.9 | 51 | 26 | 1.37 |
| D | 16.2 | 19.8 | 3.0 | 93 | 60 | 1.22 |
| E | 14.5 | 20.0 | 4.8 | 95 | 68 | 1.38 |
| F | 16.8 | 18.1 | 4.5 | 92 | 85 | 1.08 |
| G | 16.9 | 19.5 | 3.2 | 97 | 79 | 1.16 |
| Comp. sample | 18.4 | 25.2 | <0.1 | 27 | 9 | 1.37 |

As is evident from Table 5 above, good phosphorus solubility and calcium solubility were obtained when the sulphur content of the final product was kept between 1 and 9% by weight. However, the comparative sample, to which no sulphuric acid had been added, exhibited low phosphorus solubility and calcium solubility.

The monocalcium phosphate has in itself fairly high calcium and phosphorus solubilities, 57 P% rel and 75 Ca% rel, but here too the calcium and phosphorus solubility increase when sulphuric acid is added to the granulation liquid.

Experiments have also been made with tricalcium phosphate, which was subjected to granulation by means of a granulation liquid containing sulphur. Tricalcium phosphate was used as chemically pure hydroxyl apatite, Ca₅(OH)PO₄)₃. The addition of sulphuric acid in granulation gave a concentration of about 5% by weight sulphur in the final product. As reference sample, chemically pure hydroxyl apatite was used. The following values (Table 6) were obtained when the sample and the reference were examined:

**Table 6 - Product Contents and Water Solubility**

| | Hydroxyl apatite (ref) | Hydroxyl apatite after addition of S |
|---|---|---|
| %Ca | 39.6 | 32.8 |
| %P | 19.3 | 15.5 |
| %S | - | 5.5 |
| %P water sol. | <0.1 | 0.7 (4.5% rel.) |
| %Ca water sol. | <0.1 | 6.5 (19.8% rel.) |

The increase of phosphorus and calcium solubility is not quite as drastic in granulation of tricalcium phosphate as in granulation of dicalcium phosphate. However, also in this case an increase of calcium and phosphorus solubility was obtained.

The present invention also gives the advantage that the addition of sulphuric acid increases the sulphur content of the nutritional supplement. In fact, sulphur constitutes an essential nutritive substance of which there may be a marginal deficiency in some maintenance rations of feedstuff. The presence of sulphur is useful above all to ruminants, whose rumen microbes are dependent on the supply of sulphur.

## Claims

1. A granular composition, which comprises calcium, phosphorus and sulphur, which has a high Ca/P ratio, a high calcium and phosphorus availability and which has a buffer capacity of less than 700 mekv H⁺/kg.

2. A granular composition according to claim 1, wherein the sulphur content is 1-9% by weight.

3. A granular composition according to claim 1 or 2, which is obtainable by granulation of a calcium compound in a granulation liquid comprising sulphuric acid.

4. A granular composition as claimed in claim 3, wherein the granulation liquid comprises 25-95% by weight sulphuric acid.

5. A granular composition as claimed in any one of claims 3-4, wherein the calcium compound comprises a calcium phosphate.

6. A granular composition as claimed in claim 5, wherein the calcium phosphate comprises dicalcium phosphate.

7. A granular composition as claimed in any one of claims 3-6, wherein the calcium compound comprises limestone.

8. A granular composition as claimed in any one of claims 3-7, wherein the granulation liquid further comprises phosphoric acid.

9. A granular composition as claimed in any one of claims 3-8, wherein the sulphuric acid and optionally water and/or optionally phosphoric acid are mixed to a granulation liquid, and that the granulation liquid is then added to the calcium compound in a granulating device.

10. A granular composition as claimed in any one of claims 3-9, wherein the sulphuric acid and optionally water and/or optionally phosphoric acid are added to the calcium compound each separately in a granulating device.

## Patentansprüche

1. Körnige Zusammensetzung, welche Calcium, Phosphor und Schwefel umfasst, welche ein hohes Ca/P-Verhältnis und eine hohe Calcium- und Phosphor-Verfügbarkeit aufweist, und welche eine Pufferkapazität von weniger als 700 mekv H⁺/kg aufweist.

2. Körnige Zusammensetzung nach Anspruch 1, wobei der Schwefelgehalt 1 bis 9 Gewichts-% beträgt.

3. Körnige Zusammensetzung nach Anspruch 1 oder 2, welche durch Granulieren einer Calciumverbindung in einer Granulierflüssigkeit, die Schwefelsäure enthält, zu erhalten ist.

4. Körnige Zusammensetzung nach Anspruch 3, wobei die Granulierflüssigkeit 25 bis 95 Gewichts-% Schwefelsäure umfasst.

5. Körnige Zusammensetzung nach einem der Ansprüche 3 bis 4, wobei die Calciumverbindung ein Calciumphosphat umfasst.

6. Körnige Zusammensetzung nach Anspruch 5, wobei das Calciumphosphat Dicalciumphosphat umfasst.

7. Körnige Zusammensetzung nach einem der Ansprüche 3 bis 6, wobei die Calciumverbindung Kalkstein umfasst.

8. Körnige Zusammensetzung nach einem der Ansprüche 3 bis 7, wobei die Granulierflüssigkeit ferner Phosphorsäure umfasst.

9. Körnige Zusammensetzung nach einem der Ansprüche 3 bis 8, wobei die Schwefelsäure und gegebenenfalls Wasser und/oder gegebenenfalls Phosphorsäure zu einer Granulierflüssigkeit vermischt werden, und wobei die Granulierflüssigkeit dann in einer Granuliervorrichtung zu der Calciumverbindung hinzu gegeben wird.

10. Körnige Zusammensetzung nach einem der Ansprüche 3 bis 9, wobei die Schwefelsäure und gegebenenfalls Wasser und/oder gegebenenfalls Phosphorsäure in einer Granuliervorrichtung jeweils getrennt zu der Calciumverbindung hinzu gegeben werden.

## Revendications

1. Composition granulaire, qui comprend du calcium, du phosphore et du soufre, qui a un rapport Ca/P élevé, une importante disponibilité du calcium et du phosphore et une capacité tampon de moins de 700 mekv H⁺/kg.

2. Composition granulaire selon la revendication 1, dans laquelle la teneur en soufre est de 1 à 9 % en poids.

3. Composition granulaire selon la revendication 1 ou 2, qui peut être obtenue par granulation d'un composé de calcium dans un liquide de granulation comprenant de l'acide sulfurique.

4. Composition granulaire telle que revendiquée dans la revendication 3, dans laquelle le liquide de granulation comprend 25 à 95 % en poids d'acide sulfurique.

5. Composition granulaire telle que revendiquée dans l'une quelconque des revendications 3 et 4, dans laquelle le composé de calcium comprend un phosphate de calcium.

6. Composition granulaire telle que revendiquée dans la revendication 5, dans laquelle le phosphate de calcium comprend du phosphate de dicalcium.

7. Composition granulaire telle que revendiquée dans l'une quelconque des revendications 3 à 6, dans laquelle le composé de calcium comprend du carbonate de calcium.

8. Composition granulaire telle que revendiquée dans l'une quelconque des revendications 3 à 7, dans laquelle le liquide de granulation comprend en outre de l'acide phosphorique.

9. Composition granulaire telle que revendiquée dans l'une quelconque des revendications 3 à 8, dans laquelle l'acide sulfurique et facultativement de l'eau et/ou facultativement de l'acide phosphorique sont mélangés dans un liquide de granulation, lequel liquide de granulation est ensuite ajouté au composé de calcium dans un dispositif de granulation.

10. Composition granulaire telle que revendiquée dans l'une quelconque des revendications 3 à 9, dans laquelle l'acide sulfurique et facultativement de l'eau et/ou facultativement de l'acide phosphorique sont ajoutés au composé de calcium, chacun séparément, dans un dispositif de granulation.
